# EUROPEAN PATENT APPLICATION

(11) **EP 4 597 790 A1**
(43) Date of publication of application: **06.08.2025**
(21) Application number: 23871265.7
(22) Date of filing: 05.04.2023
(51) Int. Cl.: H02J 7/02

(54) **CHARGING PLAN CREATION METHOD, CHARGING PLAN CREATION DEVICE, AND CHARGING PLAN PROVIDING SYSTEM**

(30) Priority: 29.09.2022 JP 2022155800
(71) Applicant: HITACHI HIGH-TECH CORPORATION, Tokyo 105-6409 (JP)
(72) Inventor: SUMIKAWA, Yosuke, Tokyo 105-6409 (JP); TAJIRI, Rikiya, Tokyo 105-6409 (JP); HORIKOSHI, Nobuya, Tokyo 105-6409 (JP); HIRASAWA, Shigeki, Tokyo 105-6409 (JP); YOSHIMURA, Mina, Tokyo 105-6409 (JP)
(74) Representative: MERH-IP Matias Erny Reichl Hoffmann Patentanwälte PartG mbB
(86) International application number: PCT/JP2023/014096
(87) International publication number: WO 2024/070016

(57) **Abstract**

A charging plan for a plurality of batteries introduced at a base is created. A charging plan creation method for creating a charging plan for a plurality of batteries at one or a plurality of bases under one or a plurality of power contracts includes: accepting a power usage amount at the base, respective power consumption amounts scheduled to be consumed by the plurality of batteries, and respective chargeable times during which the plurality of batteries are able to be charged (S901); setting, based on the usage amount, a peak of power to be used at the base (S902); and creating, according to the respective chargeable times, a peak control charging plan for the batteries for charging with the respective power consumption amounts so as not to exceed the set peak (S903).

## Description

### Technical Field

The present disclosure relates to a charging plan creation method and a charging plan creation device for creating a charging plan for a battery, and a charging plan providing system.

### Background Art

As transition from internal combustion vehicles to electric vehicles (EVs) accelerates in the future, the absolute number of EVs at charging bases of EVs is expected to increase. This is not an issue for internal combustion vehicles, which can be refueled in a relatively short time, but for EVs, which require charging equipment and take a long time to charge, it is essential to create a charging plan that ensures a power amount needed to cover a planned driving distance. PTL 1 discloses a technique for creating a charging plan in consideration of fluctuation in unit price of electric charge.

### Citation List

### Patent Literature

PTL 1: JP2019-30136A

### Summary of Invention

### Technical Problem

PTL 1 discloses creating a charging plan for charging one battery so as not to exceed an upper limit threshold TH.

However, in PTL 1, no consideration is given to a case where a plurality of batteries are charged in parallel. Therefore, no consideration is given to how to create a charging plan when a plurality of batteries are introduced at a base.

Therefore, the disclosure has been made in view of the above problem, and an object of the disclosure is to provide a charging plan creation method, a charging plan creation device, and a charging plan providing system capable of creating a charging plan for a plurality of batteries introduced at a base.

### Solution to Problem

A charging plan creation method according to the disclosure is a charging plan creation method for creating a charging plan for a plurality of batteries at one or a plurality of bases for which one or a plurality of power contracts are made. The charging plan creation method includes: accepting a power usage amount at the base, respective power consumption amounts scheduled to be consumed by the plurality of batteries, and respective chargeable times during which the plurality of batteries are able to be charged; setting, based on the power usage amount, a peak of power to be used at the base; and creating, according to the respective chargeable times, a peak control charging plan for the plurality of batteries for charging with the respective power consumption amounts so as not to exceed the set peak.

### Advantageous Effects of Invention

According to the charging plan creation method according to the disclosure, a charging plan for a plurality of batteries introduced at a base can be created.

Other technical problems and novel features will become apparent from description of the present description and the accompanying drawings.

### Brief Description of Drawings

[FIG. 1A] FIG. 1A is an overall configuration diagram showing a charging plan providing system according to a first embodiment.
[FIG. 1B] FIG. 1B shows a hardware block diagram (a) and a functional block diagram (b) of a processing unit according to the first embodiment.
[FIG. 2] FIG. 2 is a diagram showing a base power usage amount table according to the first embodiment.
[FIG. 3] FIG. 3 is a diagram showing a base power contract information table according to the first embodiment.
[FIG. 4] FIG. 4 is a diagram showing a base vehicle information table according to the first embodiment.
[FIG. 5] FIG. 5 is a diagram showing a charging plan table according to the first embodiment.
[FIG. 6] FIG. 6 is a screen display example of a charging plan according to the first embodiment.
[FIG. 7] FIG. 7 is a diagram showing a base annual power usage amount table according to the first embodiment.
[FIG. 8] FIG. 8 is a screen display example of time series data of base annual power usage amount according to the first embodiment.
[FIG. 9] FIG. 9 is a flowchart showing a method for creating a charging plan so as not to exceed peak power according to the first embodiment.
[FIG. 10] FIG. 10 is a flowchart showing a method for creating a charging plan such that an annual electric charge is lowest according to the first embodiment.
[FIG. 11] FIG. 11 is a flowchart showing a method for creating a charging plan according to a second embodiment.

### Description of Embodiments

In the following embodiments, when necessary for convenience, the description will be made by being divided into a plurality of sections or embodiments, but unless otherwise stated, they are not unrelated to each other, and one has a relation with all or a part of modifications, details, supplementary explanations, and the like of the other.

In the following embodiments, when referring to the number of elements (including the number, numerical values, amounts, ranges, or the like) or the like, the number of elements is not limited to a specific number, and may be the specific number or more or the specific number or less, unless otherwise specified or except a case where the number is apparently limited to a specific number in principle.

Further, in the following embodiments, it is needless to mention that components (also including element steps and the like) thereof are not necessarily essential unless otherwise specified or unless clearly considered to be essential in principle.

Similarly, in the following embodiments, when a shape, a positional relation, or the like of a component or the like is referred to, the shape or the like is substantially approximate or similar to the shape or the like unless otherwise specified or clearly considered otherwise in principle. The same applies to the above numerical values and ranges.

In all drawings for describing the embodiments, the same members are denoted by the same reference numerals in principle, and repeated description thereof will be omitted.

### (First Embodiment)

### <Charging Plan Providing System 1>

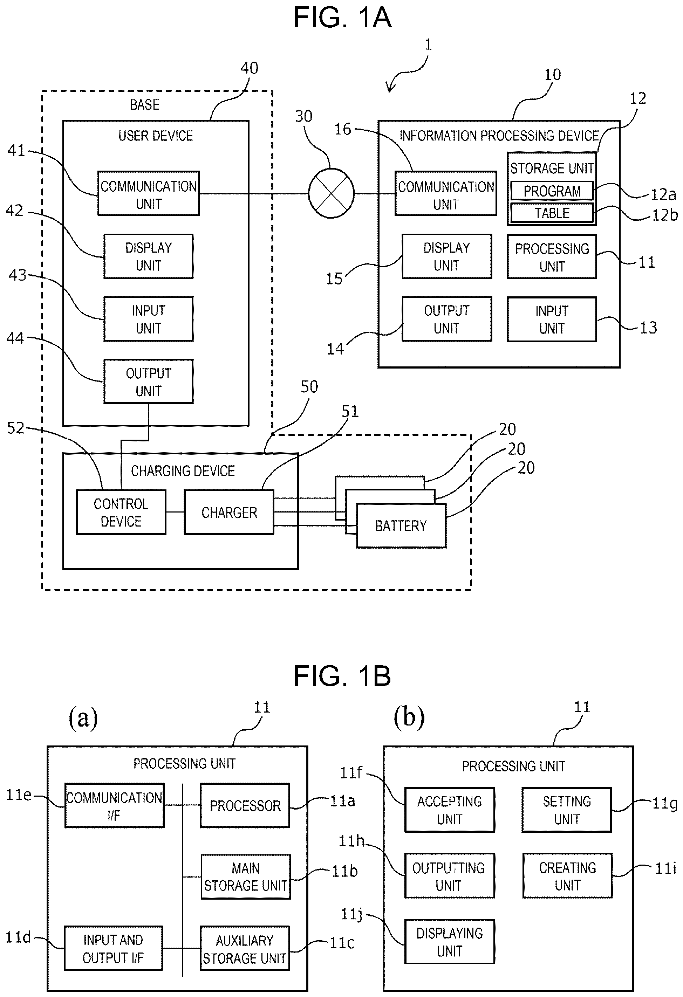

First, a configuration of a charging plan providing system 1 according to a first embodiment will be described. FIG. 1A is an overall configuration diagram showing the charging plan providing system 1 according to the first embodiment. The charging plan providing system 1 provides a charging plan for a plurality of batteries 20 that is created by an information processing device 10 to a user device 40 installed at a base via a network 30. The charging plan providing system 1 includes the information processing device 10 that creates a charging plan (a peak control charging plan and a charge control charging plan), the user device 40 installed at the base, the plurality of batteries 20, and a charging device 50 that charges the plurality of batteries 20. The information processing device 10 and the user device 40 are communicably connected via the network 30. The user device 40 and the charging device 50 are communicably connected to each other in a wired or wireless manner. For example, the user device 40 is a Web client, and the information processing device 10 is a Web server. The Web client executes software using a Web server such as a Web browser. The Web client receives a Web service by sending a processing request to a Web server and receiving a response thereto from the Web server. In the first embodiment, the user device 40 (the Web client) receives services such as creation of a charging plan for the battery 20 and calculation of an annual power usage amount after introduction of the battery 20 from the information processing device 10 (the Web server).

### <Battery 20>

The plurality of batteries 20 according to the first embodiment are assumed to be batteries 20 for an electric vehicle (EV), but the battery of the disclosure may also be a battery 20 for a plug-in hybrid vehicle (PHV), the battery 20 for a fuel cell vehicle (FCV), the battery 20 for construction machinery, a battery 20 for an electric motorcycle, the battery 20 for a tram, the battery 20 for an uninterruptible power supply (UPS), and the like. The plurality of batteries 20 according to the first embodiment are assumed to be batteries 20 that are fixed to each of the above-described devices and to be charged, but the battery of the disclosure may be the battery 20 that is removable from each of the above-described devices and can be charged independently.

### <Charging Device 50>

The charging device 50 charges one or the plurality of batteries 20. The charging device 50 includes a charger 51 to which one or the plurality of batteries 20 are connected in a chargeable manner, and a control device 52 that switches between charging and stopping charging of the battery 20 by the charger 51. The control device 52 may be capable of not only switching between charging and stopping charging, but also freely changing output power within rated output power. The control device 52 causes the charger 51 to charge the battery 20 or causes the charger 51 to stop charging the battery 20 according to a control signal from an output unit 14 of the user device 40. The control device 52 may automatically charge and stop charging the battery 20 connected to the charger 51 according to the charging plan provided from the information processing device 10. A plurality of outputs of the charger 51 may be the same as or different from each other. For example, the plurality of outputs of the charger 51 may be for normal charging, for quick charging, or a combination thereof.

### <User Device 40>

The user device 40 is an example of a terminal device of the disclosure. The user device 40 is a general computer system including a processor and a memory, and is a personal computer, a smartphone, a tablet, or the like. The user device 40 includes a communication unit 41 that communicates with the network 30, a display unit 42 such as a liquid crystal display or an organic electro-luminescence (EL) display, an input unit 43 such as a keyboard or a mouse, and an output unit 44 that outputs a control signal to the charging device 50.

The user device 40 receives various types of information on a browser screen provided from the information processing device 10 and transmits the various types of information to the information processing device 10. Specifically, the user device 40 transmits a base power usage amount table 200, a base power contract information table 300, and a base vehicle information table 400, which will be described later, to the information processing device 10. As a format of the various types of information transmitted by the user device 40 to the information processing device 10, for example, a format such as a comma-separated values (CSV) or an extensible markup language (XML) can be used. Hereinafter, various tables transmitted from the user device 40 to the information processing device 10 will be described in detail.

### <Base Power Usage Amount Table 200>

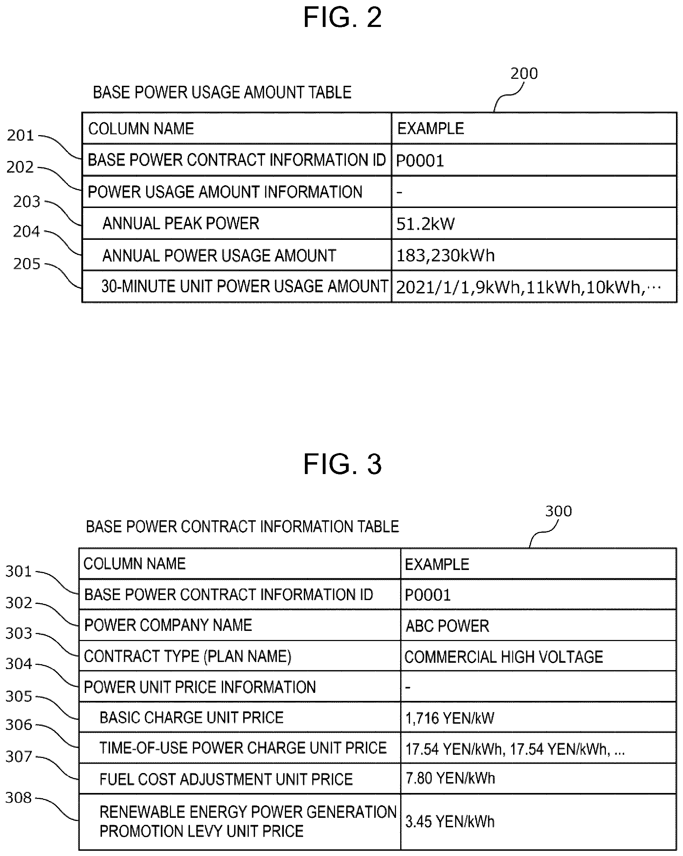

FIG. 2 is a diagram showing the base power usage amount table 200 according to the first embodiment. The base power usage amount table 200 (hereinafter, abbreviated as a usage amount table 200) includes base power contract information ID 201 ("P0001" in the example in FIG. 2) which is an identification number of a power contract made at the base, and power usage amount information 202 showing a power usage amount used at the base under the power contract. When a plurality of power contracts are made, a plurality of usage amount tables 200 are transmitted to the information processing device 10. The power usage amount information 202 includes an annual peak power 203, an annual power usage amount 204, and a 30-minute unit power usage amount 205. The usage amount table 200 may be a history of past usage amount, a prediction of future usage amount, or a combination of both. In the case of a history of past usage amount, a smart meter or the like measures and stores the power usage amount at the base. For example, the smart meter is a measuring instrument that measures and stores a power usage amount every 30 minutes, and files a history of the power usage amount, and stores the history as the usage amount table 200. In the case of prediction of future usage amount, an operation management system or the like predicts a power usage amount. For example, the operation management system predicts a power usage amount every 30 minutes based on an operation plan of a vehicle to be managed, files prediction of the power usage amount, and stores the prediction as the usage amount table 200.

The annual peak power 203 ("51.2 kW" in the example in FIG. 2) is a largest power value for a predetermined period. The annual power usage amount 204 (" 183,230 kWh" in the example in FIG. 2) is a total power amount used for the predetermined period. The 30-minute unit power usage amount 205 is time series data of the power usage amount every 30 minutes. In the example in FIG. 2, the power usage amount from 0:00 to 0:30 on January 1, 2021 is 9 kWh, the power usage amount from 0:30 to 1:00 on January 1, 2021 is 11 kWh, the power usage amount from 1:00 to 1:30 on January 1, 2021 is 10 kWh, and .... The annual peak power 203, the annual power usage amount 204, and the 30-minute unit power usage amount 205 may be determined based on the history of past usage amount, may be determined based on the prediction of future usage amount, or may be determined based on both.

The period such as one year or 30 minutes described above is an example, and the period can be appropriately changed. The same applies hereinafter.

### <Base Power Contract Information Table 300>

FIG. 3 is a diagram showing the base power contract information table 300 according to the first embodiment. The base power contract information table 300 includes base power contract information ID 301 ("P0001" in the example in FIG. 3), a power company name 302 ("ABC power" in the example in FIG. 3), a contract type (a plan name) 303 ("commercial high voltage" in the example in FIG. 3), and power unit price information 304. The power unit price information 304 includes a basic charge unit price 305, a time-of-use power charge unit price 306, a fuel cost adjustment unit price 307, and a renewable energy power generation promotion levy unit price 308.

The basic charge unit price 305 is used to calculate a basic charge. In the first embodiment, a metered contract is assumed, and the basic charge is calculated by multiplying the annual peak power 203 by the basic charge unit price 305. A unit price of the electric charge may be individually determined for each season, day of the week, and time of day.

The power contract may be a 24-hour flat charge contract, or may be a charge contract in which a charge changes depending on the time of day. In the case of the charge contract in which a charge changes depending on the time of day, the time-of-use power charge unit price 306 is required. The time-of-use power charge unit price 306 indicates an electric charge unit price for each time of day. In the example in FIG. 3, the electric charge unit price from 0:00 to 1:00 is 17.54 yen/kWh, the electric charge unit price from 1:00 to 2:00 is 17.54 yen/kWh, and ....

The fuel cost adjustment unit price 307 is a value used to automatically adjust an electric charge in accordance with a fluctuation in fuel price, and the renewable energy power generation promotion levy unit price 308 is a unit price of a levy levied to promote spread of renewable energy.

### <Base Vehicle Information Table 400>

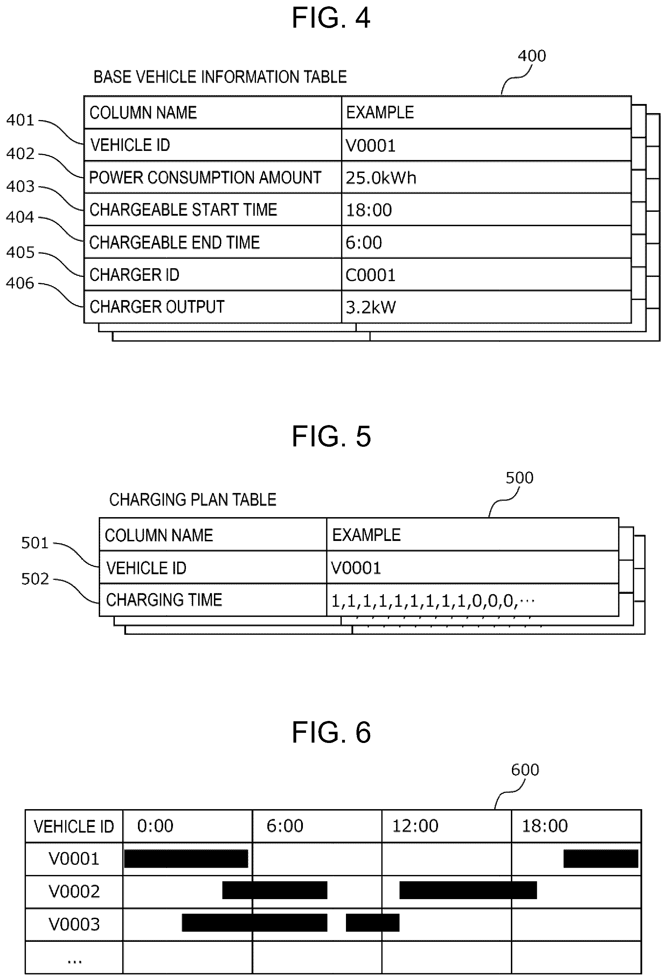

FIG. 4 is a diagram showing the base vehicle information table 400 according to the first embodiment. The base vehicle information table 400 stores information on an EV present at the base. The base vehicle information table 400 is created for each battery 20 of the vehicle and provided to the information processing device 10. The base vehicle information table 400 includes a vehicle ID 401 ("V0001" in the example in FIG. 4) which is an identification number of the vehicle, a daily power consumption amount 402 ("25.0 kWh" in the example in FIG. 4) that is scheduled to be consumed by the battery 20 of the vehicle, a start time (a chargeable start time 403) ("18:00" in the example in FIG. 4) and an end time (a chargeable end time 404) ("6:00" in the example in FIG. 4) of a chargeable time during which the battery 20 can be charged, a charger ID 405 ("C0001" in the example in FIG. 4) for identifying the charger 51 that charges the battery 20, and a charger output 406 ("3.2 kW" in the example in FIG. 4) which is an output of the charger 51. Although it is assumed that the chargeable start time 403 and the chargeable end time 404 designate a specific chargeable time of day, only a length of the chargeable time may be designated.

In the first embodiment, since it is assumed that the battery 20 of the EV is to be charged, the base vehicle information table 400 includes the vehicle ID 401, but when the plurality of batteries 20 are mounted on the EV or when the battery 20 other than that of the EV is to be charged, a battery ID for identifying the battery 20 may be used instead of the vehicle ID 401.

The power consumption amount 402 may be calculated based on a travel distance or a travel time a user plans to drive the EV per day, or the power consumption amount 402 may be directly input by the user.

The charger 51 that charges the battery 20 is allocated to each battery 20 in advance based on the power consumption amount 402, the chargeable time (the chargeable start time 403 and the chargeable end time 404), the output of the charger 51, and the like. An allocation between the battery 20 and the charger 51 may be one-to-one, one-to-multiple, multiple-to-one, or multiple-to-multiple.

### <Information Processing Device 10>

The information processing device 10 is an example of a charging plan creation device of the disclosure. The information processing device 10 creates a charging plan for the plurality of batteries 20 at one or a plurality of bases for which one or a plurality of power contracts are made. The information processing device 10 is a computer system including a processor and a memory, and is a cloud server, an on-premise server, or the like. As shown in FIG. 1A, the information processing device 10 includes a processing unit 11 that performs various types of information processing, a storage unit 12 that stores a program 12a and various tables 12b, an input unit 13 such as a keyboard and a mouse, the output unit 14 that outputs information to an external storage device or the like, a display unit 15 such as a liquid crystal display or an organic electro-luminescence (EL) display, and a communication unit 16 that communicates with the network 30. The storage unit 12 is a large-capacity storage medium such as a hard disk drive (HDD) or a solid state drive (SSD), and stores the program 12a (hereinafter, a charging plan creation program) for creating a charging plan for the battery 20 and the various tables 12b. The various tables 12b include the usage amount table 200, the base power contract information table 300, and the base vehicle information table 400 described above.

### <Processing Unit 11>

Here, details of the processing unit 11 will be described. FIG. 1B shows a hardware block diagram (a) and a functional block diagram (b) of the processing unit 11 according to the first embodiment. As shown in (a) of FIG. 1B, the processing unit 11 includes a processor 11a, a main storage unit 11b, an auxiliary storage unit 11c, an input and output I/F 11d, and a communication I/F 11e. The processor 11a is a central processing unit (CPU), a digital signal processor (DSP), or an application specific integrated circuit (ASIC). I/F is an abbreviation for interface. The main storage unit 11b is a dynamic random access memory (DRAM) or the like. The auxiliary storage unit 11c is a read only memory (ROM) or the like. The input and output I/F 11d is communicably connected to the input unit 13, the output unit 14, and the display unit 15. The communication I/F 11e is communicably connected to the communication unit 16.

When the processor 11a executes the program 12a, the processing unit 11 executes various functions. As shown in (b) of FIG. 1B, the processing unit 11 that executes the program 12a (the charging plan creation program) for creating a charging plan functions as an accepting unit 11f, a setting unit 11g, an outputting unit 11h, a creating unit 11i, and a displaying unit 11j.

The accepting unit 11f accepts the 30-minute unit power usage amount 205 in the usage amount table 200 as the power usage amount at the base. The accepting unit 11f accepts the power consumption amount 402 in the base vehicle information table 400 as the power consumption amount per day consumed by the battery 20. The accepting unit 11f accepts the chargeable start time 403 and the chargeable end time 404 in the base vehicle information table 400 as the chargeable time during which the battery 20 can be charged.

The accepting unit 11f accepts the time-of-use power charge unit price 306 in the base power contract information table 300 as the unit price information of the time-of-use power amount under the power contract.

The setting unit 11g sets the annual peak power 203 in the usage amount table 200 as the peak of power to be used at the base. The setting unit 11g may set a maximum power usage amount among the 30-minute unit power usage amount 205 in the usage amount table 200 as the peak of power to be used at the base.

The creating unit 11i creates, according to the chargeable time (for example, the chargeable start time 403 (18:00) to the chargeable end time 404 (6:00)), a charging plan for the battery 20 for charging with the power consumption amount (for example, the power consumption amount 402 (25.0 kWh)) so as not to exceed the set peak (for example, the annual peak power 203 (51.2 kW)). For example, the creating unit 11i creates a charging plan table 500 as the charging plan for the battery 20. Details of the charging plan table 500 will be described later.

The creating unit 11i further creates, according to the chargeable time (for example, the chargeable start time 403 (18:00) to the chargeable end time 404 (6:00)), a charging plan (a charge control charging plan) for the battery 20 for charging with the power consumption amount (for example, the power consumption amount 402 (25.0 kWh)) such that a power charge calculated using the unit price information (for example, the "time-of-use power charge unit price 306: 17.54 yen/kWh, 17.54 yen/kWh, and ...") is lowest.

The outputting unit 11h outputs a base annual power usage amount table 700 for each power contract. Specifically, the outputting unit 11h calculates a predicted total power usage amount at the base for a predetermined period (for example, one year) by multiplying a charging time of each vehicle by the output of the charger 51 allocated to the vehicle. Details of the base annual power usage amount table 700 will be described later.

The displaying unit 11j displays time series data of the power usage amount (prediction) at the base on the display unit 42 of the user device 40 using the power usage amount information 202 and the created charging plan table 500.

### <Charging Plan Table 500>

FIG. 5 is a diagram showing the charging plan table 500 according to the first embodiment. The charging plan table 500 is created by the creating unit 11i described above. The charging plan table 500 is created for each vehicle. The charging plan table 500 includes a vehicle ID 501 ("V0001" in the example in FIG. 5) and a charging time 502 indicating a time for charging the battery 20 of the vehicle. In the example in FIG. 5, the time for charging the battery 20 is indicated by "1", and the time for stopping charging the battery 20 is indicated by "0". One value ("1" or "0") in the charging time 502 is, for example, a value every 30 minutes.

### <Screen Display Example of Charging Plan>

FIG. 6 is a screen display example 600 of the charging plan according to the first embodiment. The screen display example 600 is displayed on the display unit 42 of the user device 40. The screen display example 600 of the charging plan is an image showing a time for which the battery 20 is to be charged for each vehicle.

### <Base Annual Power Usage Amount Table 700>

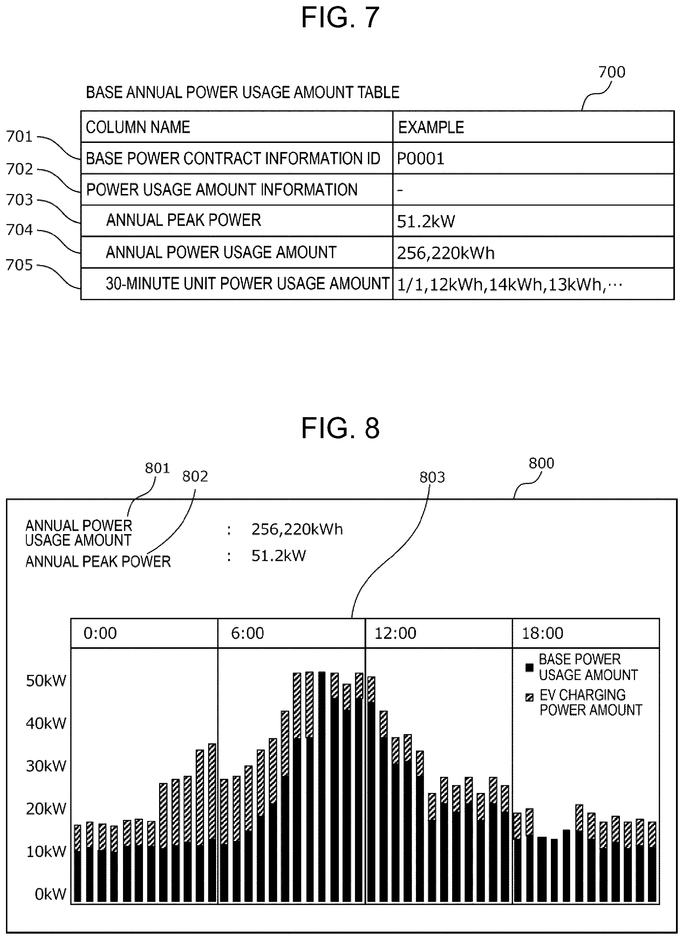

FIG. 7 is a diagram showing the base annual power usage amount table 700 according to the first embodiment. The base annual power usage amount table 700 includes a base power contract information ID 701 and power usage amount information 702 indicating a predicted power usage amount to be used under the power contract at the base. The power usage amount information 702 includes an annual peak power 703, an annual power usage amount 704, and a 30-minute unit power usage amount 705.

The annual peak power 703 ("51.2 kW" in the example in FIG. 7) is a power value predicted to be the largest in the next year. When the charging plan is created so as not to exceed the set peak (for example, the annual peak power 203 (51.2 kW)), the annual peak power 703 in FIG. 7 is the same as the annual peak power 203 in FIG. 2.

The annual power usage amount 704 (256,220 kWh in the example in FIG. 7) is a predicted total power amount to be used over the next year. The annual power usage amount 704 is a total of the annual power usage amount 204 in FIG. 2 and the predicted power amount to be used for charging the battery 20 over the next year.

The 30-minute unit power usage amount 705 is time series data of the predicted power usage amount at the base for every 30 minutes. In the example in FIG. 7, the power usage amount from 0:00 to 0:30 on January 1, 2022 is 12 kWh, the power usage amount from 0:30 to 1:00 on January 1, 2022 is 14 kWh, the power usage amount from 1:00 to 1:30 on January 1, 2022 is 13 kWh, and ....

### <Screen Display Example of Base Annual Power Usage Amount>

FIG. 8 is a screen display example 800 of the time series data of the base annual power usage amount according to the first embodiment. The screen display example 800 in FIG. 8 is displayed on the display unit 42 (the Web browser) of the user device 40, for example. The screen display example 800 in FIG. 8 includes an annual power usage amount 801 (256,220 kWh in the example in FIG. 8), an annual peak power 802 (51.2 kW in the example in FIG. 8), and a time series graph 803 of a predicted power usage amount in predetermined time units (for example, in units of 30 minutes). The power usage amount in the graph 803 is obtained by adding the power usage amount at the base before introduction of the EV (the base power usage amount in the drawing) and the power usage amount (an EV charging power amount) required for charging the battery 20 of the EV. The power usage amount displayed on the screen may be a history of past usage amount, may be a prediction of future usage amount, or may be a combination of both.

As shown in FIG. 8, the displaying unit 11j selects and displays a predetermined period (for example, one day) including the annual peak power 802. The displaying unit 11j can also select and display a desired period not including the annual peak power 802 according to a user instruction. The displaying unit 11j may use the usage amount table 200, the base power contract information table 300, and the base annual power usage amount table 700 to display a total annual electric charge (a predicted value) at the base when the plurality of batteries 20 are introduced.

### <Charging Plan Creation Method>

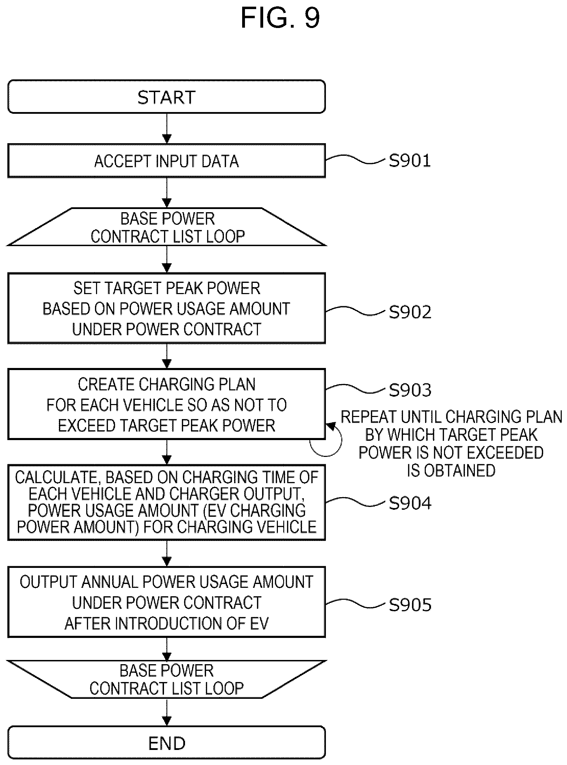

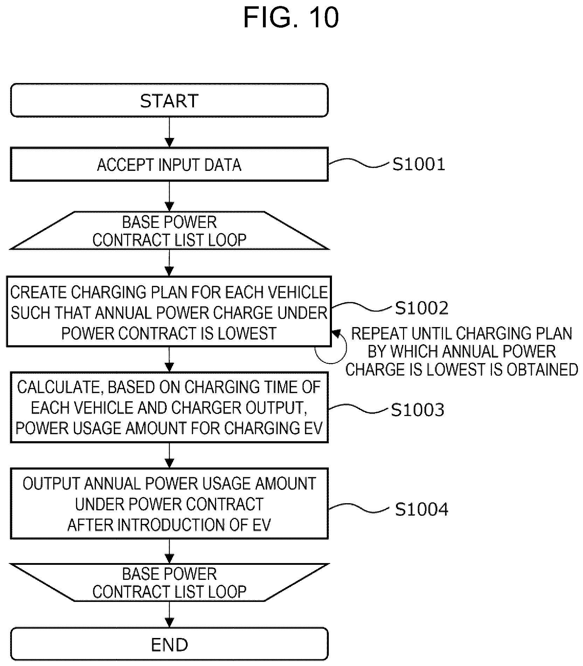

Next, a charging plan creation method will be described with reference to FIGS. 9 and 10. The charging plan (the peak control charging plan) of the first embodiment is created so as not to exceed peak power for a predetermined period, and the other charging plan (the charge control charging plan) is created such that an annual electric charge is lowest. The processor 11a of the processing unit 11 executes the program 12a, thereby executing each step in FIGS. 9 and 10.

### <Method for Creating Charging Plan (Peak Control Charging Plan) so as not to Exceed Peak Power>

FIG. 9 is a flowchart showing a method for creating the charging plan so as not to exceed peak power according to the first embodiment.

The accepting unit 11f accepts the usage amount table 200 and the base vehicle information table 400 from the user device 40 (step S901).

Next, the setting unit 11g sets a target peak power based on the power usage amount for the predetermined period under the power contract. Specifically, the setting unit 11g sets the annual peak power 203 in the usage amount table 200 as the target peak power (step S902). The setting unit 11g may set a power usage amount other than the annual peak power 203 in the usage amount table 200 as the target peak power. For example, the setting unit 11g may set, as the target peak power, a power usage amount predicted in the future at the base.

Next, the creating unit 11i creates a charging plan for each vehicle so as not to exceed the set target peak power. Specifically, for each of the plurality of batteries 20, the creating unit 11i creates, according to respective chargeable times, a charging plan for charging with the power consumption amount 402 so as not to exceed the set target peak power (step S903). The process of step S903 is repeated until each charging plan by which the target peak power is not exceeded is obtained.

Next, the outputting unit 11h calculates a power usage amount (an EV charging power amount) required for charging the battery 20 of the vehicle by multiplying the chargeable time of each vehicle by the output of the charger 51 allocated to that vehicle (step S904).

Next, the outputting unit 11h adds the power usage amount (the EV charging power amount) required for charging the battery 20 of the vehicle and the power usage amount (the annual power usage amount 204) at the base before introduction of the EV, and outputs an annual power usage amount under the power contract after the introduction of the EV (step S905). The annual power usage amount is the annual power usage amount 704 in FIG. 7 and the annual power usage amount 801 in FIG. 8.

The processes of steps S902 to S905 described above are executed for each power contract. That is, when a plurality of power contracts are made at the base, the processes of steps S902 to S905 are executed for each of the plurality of power contracts, the charging plan is created for each of the plurality of power contracts, and the annual power usage amount is output.

### <Method for Creating Charging Plan (Charge Control Charging Plan) Such That Annual Electric Charge is Lowest>

FIG. 10 is a flowchart showing a method for creating the charging plan such that an annual electric charge is lowest according to the first embodiment.

The accepting unit 11f accepts the usage amount table 200 and the base power contract information table 300 from the user device 40 (step S1001).

Next, the creating unit 11i creates a charging plan for each vehicle such that an annual electric charge is lowest. Specifically, for each of the plurality of batteries 20, the creating unit 11i creates, according to respective chargeable times, a charging plan for charging with the respective power consumption amounts 402 such that the annual electric charge is the lowest (step S1002). The process of step S1002 is repeated until the charging plan by which the annual electric charge is the lowest is obtained.

Next, the outputting unit 11h calculates a power usage amount (an EV charging power amount) required for charging the battery 20 of the vehicle by multiplying the charging time of each vehicle by the output of the charger 51 allocated to that vehicle (step S1003).

Next, the outputting unit 11h adds the power usage amount (the EV charging power amount) required for charging the battery 20 of the vehicle and the power usage amount (the annual power usage amount 204) at the base before introduction of the EV, and outputs an annual power usage amount under the power contract after the introduction of the EV (step S1004).

The processes of steps S1002 to S1004 described above are executed for each power contract. That is, when a plurality of power contracts are made at the base, the processes of steps S1002 to S1004 are executed for each of the plurality of power contracts, the charging plan is created for each of the plurality of power contracts, and the annual power usage amount is output.

### <Effects of First Embodiment>

In the first embodiment, the peak control charging plan for the plurality of batteries 20 for charging with the power consumption amount 402 can be created according to the respective chargeable times (the chargeable start time 403 to the chargeable end time 404) so as not to exceed the annual peak power 203. Accordingly, charging can be performed with the power consumption amount 402 to be consumed by the battery 20 within the chargeable time while preventing the peak of power at the base. In the case of the power contract in which an electric charge is determined based on a peak of power, the electric charge can be reduced by reducing the peak of power.

In the first embodiment, the charge control charging plan for the battery 20 for charging with the power consumption amount 402 can be created according to the chargeable time such that the power charge for the predetermined period calculated using the unit price information is the lowest. Accordingly, the charge control charging plan different from the above-described charging plan can be created. As described above, in the first embodiment, not only the charging plan created so as not to exceed the annual peak power 203 but also the charge control charging plan created such that the electric charge is the lowest can be provided to the user device 40. The user can compare and refer to the charging plans created based on various criteria.

By creating, according to the respective chargeable times, the charging plan for the plurality of batteries 20 for charging with the respective power consumption amounts 402 so as not to exceed the set annual peak power 203, the charging plan for the plurality of batteries 20 so as not to exceed the annual peak power 203 can be created when the plurality of batteries 20 are introduced at the base.

By creating the power plan for each of the plurality of power contracts, a user who has made or plans to make a plurality of power contracts can compare and consider the charging plans for the battery 20 for each power contract.

In the first embodiment, by outputting the annual power usage amount 704, the annual power usage amount 801, and the total power charge (the predicted value), the user can check the predicted annual power usage amount and the total annual electric charge when the plurality of batteries 20 are introduced at the base.

By displaying the time series data (the graph 803) of the power usage amount at the base as shown in FIG. 8 on the display unit 42, the user can easily grasp the predicted transition of the power usage amount.

### (Second Embodiment)

In the first embodiment described above, a case is described in which all of a plurality of batteries of an EV scheduled to be introduced at a base are operated under one power contract, but the plurality of batteries scheduled to be introduced at the base may also be allocated and operated under a plurality of power contracts. For example, a plurality of batteries scheduled to be introduced at a base may be allocated and operated under each of a power contract made at one demand location at the base and another power contract made at a special demand location at the base, or may be allocated and operated under each of a power contract made at a base and a power contract made at another base. The special demand location described above is a demand location for which a power contract different from that of the one demand location is made. Here, a case will be described in detail in which a plurality of batteries scheduled to be introduced at a base are allocated and operated under each of a power contract made at one demand location at a base and another power contract made at a special demand location at the base.

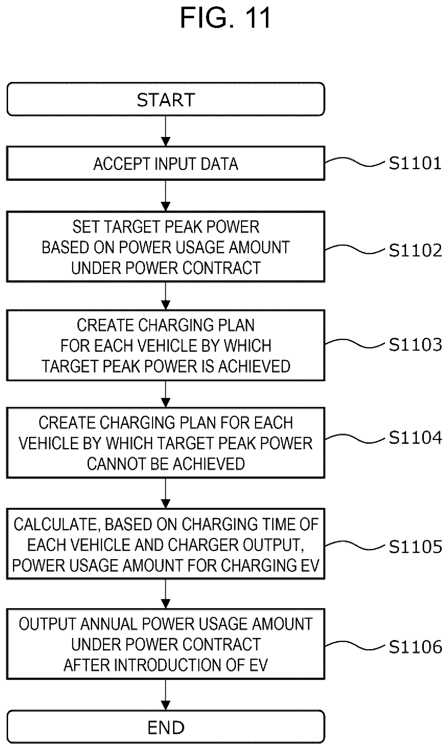

FIG. 11 is a flowchart showing a method for creating a charging plan according to the second embodiment. Here, details of the charging plan creation method according to the second embodiment will be described with reference to FIG. 11.

The accepting unit 11f accepts the usage amount table 200 and the base vehicle information table 400 related to a power contract for one demand location from the user device 40 (step S1101). Next, the setting unit 11g sets a target peak power based on a power usage amount for a predetermined period under the power contract. Specifically, the setting unit 11g sets the annual peak power 203 in the usage amount table 200 as the target peak power (step S1102). The setting unit 11g may set a power usage amount other than the annual peak power 203 in the usage amount table 200 as the target peak power. For example, the setting unit 11g may set, as the target peak power, a power usage amount predicted in the future at the base. Next, the creating unit 11i creates a charging plan for a vehicle so as not to exceed the set target peak power. Specifically, for the first battery 20, the creating unit 11i creates, according to a chargeable time, a charging plan for charging with the power consumption amount 402 so as not to exceed the set target peak power (step S1103). Similarly, for the second battery 20 and subsequent batteries, a charging plan is created, according to the chargeable time, so as not to exceed the set target peak power (step S1103).

However, among the plurality of batteries 20, there are some for which a charging plan by which the target peak power is not exceeded cannot be created. In this case, for the battery 20 for which a charging plan by which the target peak power is not exceeded cannot be created, the creating unit 11i creates a charging plan for charging at a special demand location. For the battery 20 for which a charging plan by which the target peak power is not exceeded cannot be created, the creating unit 11i creates, according to the chargeable time, a charging plan for charging at a special demand location (step S1104). Hereinafter, since the processes of steps S1105 and S1106 are the same as those of the first embodiment described above, the description thereof will be omitted. When the charging plan for charging at the special demand location is created, peak power at the special demand location may be provided, and the charging plan for the battery 20 may be created so as not to exceed the peak power.

In the second embodiment, not only a power plan for a power contract made for one demand location but also a power plan for a power contract made for a special demand location can be created.

In the second embodiment, a charging plan can be created in which a plurality of batteries scheduled to be introduced are allocated and operated under different power contracts.

### (Modification)

The invention is not limited to the above embodiments and includes various modifications. For example, the above embodiments have been described in detail to facilitate understanding of the invention, and the invention is not necessarily limited to those including all the configurations described above. A part of a configuration of a certain embodiment can be replaced with a configuration of another embodiment, and a configuration of another embodiment can also be added to a configuration of a certain embodiment. In addition, another configuration can be added to a part of a configuration of each embodiment, and the part of the configuration of each embodiment can be deleted or replaced with another configuration.

Although an example in which the information processing device 10 of the first embodiment acquires the usage amount table 200 from the user device 40 has been described, the information processing device 10 may acquire the power usage amount information 202 associated with the base power contract information ID 201 from a server of a power company or from a server that manages the power usage amount information 202.

Although an example in which the information processing device 10 of the first embodiment acquires the base power contract information table 300 from the user device 40 has been described, the information processing device 10 may acquire the power unit price information 304 associated with the base power contract information ID 301 from a server of a power company or from a server that manages the power unit price information 304.

In the first embodiment, the information processing device 10 provides the charging plan for the plurality of batteries 20 to the user device 40, but the user device 40 capable of executing the charging plan creation program may create the charging plan for the plurality of batteries 20.

### Reference Signs List

1: charging plan providing system
10: information processing device
11: processing unit
11a: processor
11b: main storage unit
11c: auxiliary storage unit
11d: input and output I/F
11e: communication I/F
11f: accepting unit
11g: setting unit
11h: outputting unit
11i: creating unit
11j: displaying unit
12: storage unit
12a: program
12b: table
13: input unit
14: output unit
15: display unit
16: communication unit
20: battery
30: network
40: user device
41: communication unit
42: display unit
43: input unit
44: output unit
50: charging device
51: charger
52: control device

## Claims

1. A charging plan creation method for creating a charging plan for a plurality of batteries at one or a plurality of bases for which one or a plurality of power contracts are made, the charging plan creation method comprising:
accepting a power usage amount at the base, respective power consumption amounts scheduled to be consumed by the plurality of batteries, and respective chargeable times during which the plurality of batteries are able to be charged;
setting, based on the power usage amount, a peak of power to be used at the base; and
creating, according to the respective chargeable times, a peak control charging plan for the plurality of batteries for charging with the respective power consumption amounts so as not to exceed the set peak.

2. The charging plan creation method according to claim 1, further comprising:
accepting unit price information of a time-of-use power amount under the power contract; and
creating, according to the respective chargeable times, a charge control charging plan for the plurality of batteries for charging with the respective power consumption amounts such that a power charge for a predetermined period calculated using the unit price information is lowest.

3. The charging plan creation method according to claim 1 or 2, wherein
the plurality of power contracts include a first power contract and a second power contract,
the power usage amount includes a first usage amount indicating a power usage amount under the first power contract and a second usage amount indicating a power usage amount under the second power contract,
the setting a peak of power includes setting a first peak based on the first usage amount and setting a second peak based on the second usage amount, and
the creating a peak control charging plan includes creating, according to the respective chargeable times, a first peak control charging plan for the plurality of batteries for charging with the respective power consumption amounts so as not to exceed the set first peak, and creating, according to the respective chargeable times, a second peak control charging plan for the plurality of batteries for charging with the respective power consumption amounts so as not to exceed the set second peak.

4. The charging plan creation method according to claim 3, wherein
the first power contract is a contract made for one demand location at the base, and the second power contract is a contract made for another demand location at the base.

5. The charging plan creation method according to claim 1 or 2, further comprising:
outputting a predicted total power usage amount or a predicted total power charge for the predetermined period at the base using the power contract and the peak control charging plan.

6. The charging plan creation method according to claim 1 or 2, further comprising:
displaying time series data of the power usage amount at the base on a display unit using the peak control charging plan.

7. A charging plan creation method for creating a charging plan for a plurality of batteries at one or a plurality of bases for which one or a plurality of power contracts are made, the charging plan creation method comprising:
accepting a power usage amount at the base, respective power consumption amounts scheduled to be consumed by the plurality of batteries, and respective chargeable times during which the plurality of batteries are able to be charged;
accepting unit price information of a time-of-use power amount under the power contract; and
creating, according to the respective chargeable times, a charge control charging plan for the plurality of batteries for charging with the respective power consumption amounts such that a power charge for a predetermined period calculated using the unit price information is lowest.

8. The charging plan creation method according to claim 7, wherein
the plurality of power contracts include a first power contract and a second power contract,
the power usage amount includes a first usage amount indicating a power usage amount under the first power contract and a second usage amount indicating a power usage amount under the second power contract,
the accepting unit price information includes accepting first unit price information of a time-of-use power amount under the first power contract and accepting second unit price information of a time-of-use power amount under the second power contract, and
the creating a charge control charging plan includes creating, according to the respective chargeable times, a first charge control charging plan for the plurality of batteries for charging with the respective power consumption amounts such that a power charge for the predetermined period calculated using the first unit price information is lowest, and creating, according to the respective chargeable times, a second charge control charging plan for the plurality of batteries for charging with the respective power consumption amounts such that a power charge for the predetermined period calculated using the second unit price information is lowest.

9. The charging plan creation method according to claim 8, wherein
the first power contract is a contract made for one demand location at the base, and the second power contract is a contract made for another demand location at the base.

10. The charging plan creation method according to claim 7, further comprising:
outputting a predicted total power usage amount or a predicted total power charge for the predetermined period at the base using the power contract and the charge control charging plan.

11. The charging plan creation method according to claim 7, further comprising:
displaying time series data of the power usage amount at the base on a display unit using the charge control charging plan.

12. A charging plan creation device for creating a charging plan for a plurality of batteries at one or a plurality of bases for which one or a plurality of power contracts are made, the charging plan creation device comprising:
an accepting unit configured to accept a power usage amount at the base, respective power consumption amounts scheduled to be consumed by the plurality of batteries, and respective chargeable times during which the plurality of batteries are able to be charged;
a setting unit configured to set, based on the power usage amount, a peak of power to be used at the base; and
a creating unit configured to create, according to the respective chargeable times, a peak control charging plan for the plurality of batteries for charging with the respective power consumption amounts so as not to exceed the set peak.

13. The charging plan creation device according to claim 12, wherein
the accepting unit further accepts unit price information of a time-of-use power amount under the power contract; and
the creating unit further creates, according to the respective chargeable times, a charge control charging plan for the plurality of batteries for charging with the respective power consumption amounts such that a power charge for a predetermined period calculated using the unit price information is lowest.

14. The charging plan creation device according to claim 12 or 13, wherein
the plurality of power contracts include a first power contract and a second power contract,
the power usage amount includes a first usage amount indicating a power usage amount under the first power contract and a second usage amount indicating a power usage amount under the second power contract,
the setting unit sets a first peak based on the first usage amount and sets a second peak based on the second usage amount, and
the creating unit creates, according to the respective chargeable times, a first peak control charging plan for the plurality of batteries for charging with the respective power consumption amounts so as not to exceed the set first peak, and creates, according to the respective chargeable times, a second peak control charging plan for the plurality of batteries for charging with the respective power consumption amounts so as not to exceed the set second peak.

15. The charging plan creation device according to claim 14, wherein
the first power contract is a contract made for one demand location at the base, and the second power contract is a contract made for another demand location at the base.

16. The charging plan creation device according to claim 12 or 13, further comprising:
an outputting unit configured to output a predicted total power usage amount or a predicted total electric charge for the predetermined period at the base using the power contract and the peak control charging plan.

17. The charging plan creation device according to claim 12 or 13, further comprising:
a displaying unit configured to display time series data of the power usage amount at the base on a display unit using the peak control charging plan.

18. A charging plan creation device for creating a charging plan for a plurality of batteries at one or a plurality of bases for which one or a plurality of power contracts are made, the charging plan creation device comprising:
an accepting unit configured to accept a power usage amount at the base, respective power consumption amounts scheduled to be consumed by the plurality of batteries, and respective chargeable times during which the plurality of batteries are able to be charged, and unit price information of a time-of-use power amount under the power contract; and
a creating unit configured to create, according to the respective chargeable times, a charge control charging plan for the plurality of batteries for charging with the respective power consumption amounts such that a power charge for a predetermined period calculated using the unit price information is lowest.

19. The charging plan creation device according to claim 18, wherein
the plurality of power contracts include a first power contract and a second power contract,
the power usage amount includes a first usage amount indicating a power usage amount under the first power contract and a second usage amount indicating a power usage amount under the second power contract,
the unit price information includes first unit price information of a time-of-use power amount under the first power contract and second unit price information of a time-of-use power amount under the second power contract, and
the creating unit creates, according to the respective chargeable times, a first charge control charging plan for the plurality of batteries for charging with the respective power consumption amounts such that a power charge for the predetermined period calculated using the first unit price information is lowest, and creates, according to the respective chargeable times, a second charge control charging plan for the plurality of batteries for charging with the respective power consumption amounts such that a power charge for the predetermined period calculated using the second unit price information is lowest.

20. The charging plan creation device according to claim 19, wherein
the first power contract is a contract made for one demand location at the base, and the second power contract is a contract made for another demand location at the base.

21. The charging plan creation device according to claim 18, further comprising:
an outputting unit configured to output a predicted total power usage amount or a predicted total power charge for the predetermined period at the base using the power contract and the charge control charging plan.

22. The charging plan creation device according to claim 18, further comprising:
a displaying unit configured to display time series data of the power usage amount at the base on a display unit using the charge control charging plan.

23. A charging plan providing system comprising:
a charging plan creation device configured to create a charging plan for a plurality of batteries at one or a plurality of bases for which one or a plurality of power contracts are made; and
a terminal device configured to communicate with the charging plan creation device, wherein
the charging plan creation device includes
an accepting unit configured to accept a power usage amount at the base, respective power consumption amounts scheduled to be consumed by the plurality of batteries, and respective chargeable times during which the plurality of batteries are able to be charged,
a setting unit configured to set, based on the power usage amount, a peak of power to be used at the base,
a creating unit configured to create, according to the respective chargeable times, a peak control charging plan for the plurality of batteries for charging with the respective power consumption amounts so as not to exceed the set peak, and
a transmitting unit configured to transmit the peak control charging plan to the terminal device, and
the terminal device includes
a receiving unit configured to receive the peak control charging plan, and
an outputting unit configured to output the peak control charging plan received by the receiving unit.
